# EUROPÄISCHE PATENTSCHRIFT

(11) **EP 3 781 741 B1**
(45) Veröffentlichungstag und Bekanntmachung des Hinweises auf die Patenterteilung: **03.05.2023**
(21) Anmeldenummer: 19714408.2
(22) Anmeldetag: 27.03.2019
(51) Int. Cl.: D06M 15/333, D06M 15/227, D06M 15/263, D06M 15/285, C08F 265/02, C08F 265/10, C08F 18/08, C08F 210/02, C08F 220/06, C08F 220/56, C08F 222/06, C08F 218/08

(54) **FORMALDEHYDFREIE BINDEMITTEL-ZUSAMMENSETZUNG**
FORMALDEHYDE-FREE BINDER COMPOSITION
COMPOSITION DE LIANT EXEMPTE DE FORMALDÉHYDE

(43) Veröffentlichungstag der Anmeldung: 24.02.2021
(73) Patentinhaber: Wacker Chemie AG, 81737 München (DE)
(72) Erfinder: WÖLFLE, Heimo, 83278 Traunstein (DE)
(74) Vertreter: Ege, Markus
(86) Internationale Anmeldenummer: PCT/EP2019/057764
(87) Internationale Veröffentlichungsnummer: WO 2020/192912

(56) Entgegenhaltungen:
- EP-A2- 0 389 893
- JP-A- 2008 297 523
- DATABASE WPI Week 201855 Thomson Scientific, London, GB; AN 2018-59024A XP002795495, & CN 108 301 198 A (SHAOXING KEQIAO KECHUANG HIGH-TECH DEV) 20. Juli 2018 (2018-07-20)

## Beschreibung

Die Erfindung betrifft eine formaldehydfreie Bindemittel-Zusammensetzung und deren Verwendung zur Herstellung von textilen Flächengebilden.

Bindemittel-Zusammensetzungen für textile Flächengebilde enthalten als Bindemittel-Komponente im Allgemeinen Polymerisate auf Basis ethylenisch ungesättigter Monomere und liegen zumeist in wässriger Dispersion vor. Die Polymerisate enthalten üblicherweise Einheiten von vernetzenden Monomeren und können deswegen untereinander und gegebenenfalls auch mit Fasern vernetzen und damit zur Bildung von textilen Flächengebilden mit höherer Festigkeit beitragen. Dadurch kann eine dauerhafte Fixierung der Fasern sowie eine Erhöhung der Widerstandsfähigkeit der textilen Flächengebilde gegenüber mechanischer Belastung erreicht werden. Textile Flächengebilde sind auch bekannt unter dem Begriff Nonwovens und können beispielsweise nach dem Airlay-, Wetlay- oder Spunlay-Verfahren hergestellt werden.

In der industriellen Praxis haben sich bisher vorwiegend N-Methylolacrylamid-Einheiten (NMA) enthaltende Polymerisate als Bindemittel-Komponente durchgesetzt. N-Methylolacrylamid-Gruppen können mit den OH-Gruppen von Cellulose oder Stärke regieren und führen folglich zu kovalenten Bindungen zwischen Bindemittelpolymer und Faser. Nachteiligerweise wird im Zuge der Vernetzung derartiger Polymerisate Formaldehyd gebildet, was aus toxikologischen Gründen zu vermeiden ist. Zusätzlich enthalten solche Polymerisate in Folge ihrer Herstellung in vielen Fällen schon als Begleitstoff Formaldehyd, beispielsweise bei der Herstellung mittels Polymerisation unter Einsatz von Formaldehyd freisetzenden Initiatoren, wie Natriumformaldehydsulfoxylat.

Es besteht also Bedarf, den Formaldehyd-Gehalt in den Bindemittel-Zusammensetzungen zu minimieren und möglichst Formaldehyd-freie textile Flächengebilde auf effiziente Weise zugänglich zu machen.

In der EP 0 596 318 B1 wird zur Reduzierung des Formaldehyds in einer wässrigen Polymerdispersion bei der Polymerisation anstelle von Na-triumformaldehydsulfoxylat Ascorbinsäure als Reduktionsmittel im Redox-Initiatorsystem verwendet. Die WO 2013/124417 A1 beschreibt einen NMA-haltigen Nonwovenbinder bei dem die N-Methylolacrylamid-Monomereinheiten teilweise mit Acrylamid-Monomereinheiten ersetzt worden sind. Aus der WO 2017/189350 A1 ist die Verwendung von mit Polyvinylalkohol stabilisierten Vinylacetat-Ethylen-Copolymerisaten, mit einer Kombination aus N-Methylolacrylamid- und Acrylamid-Comonomereinheiten, bekannt. Die WO 2013/085764 A1 beschreibt ein Faserbindemittel auf der Basis einer mit Polyvinylalkohol stabilisierten Vinylacetat-Ethylen-Copolymerdispersion, welche kein N-Methylolacrylamid enthält, und zur Verbesserung der Nassfestigkeit des Bindemittels Ammoniumchlorid enthält. In der WO 2015/067621 A1 werden Nonwovenbinder beschrieben, welche anstelle von NMA-Monomereinheiten eine Kombination von epoxidhaltigen Monomereinheiten und silanhaltigen Monomereinheiten aufweisen. Ein Nonwovenbinder in Form einer wässrigen, emulgatorstabilisierten Dispersion eines Vinylacetat-Ethylen-Copolymerisats mit N-Butoxymethyl-Acrylamid- und Acrylamid-Monomereinheiten beschreibt die EP 0 609 849 A1. Die EP 0 184 153 B1 beschreibt formaldehydfreie, mit anionischem Emulgator stabilisierte Latexbindemittel auf der Basis von Acrylsäureester-Copolymerisaten mit Acrylamid- und Dicarbonsäure-Monomereinheiten. Die JP 2008-297523 A beschreibt Klebemittel auf der Basis von mit Polyvinylalkohol stabilisierten Vinylacetat-Ethylen-Copolymerisaten, welche noch Comonomereinheiten enthalten, die sich von Acrylamid und Acrylsäure ableiten. In der PCT-Anmeldung mit der Anmeldenummer PCT/EP2019/052740 werden formaldehydfreie Bindemittel beschrieben, auf der Basis von mit Polyvinylalkohol stabilisierten Vinylacetat-Ethylen-Copolymerisaten, welche noch Comonomereinheiten enthalten, die sich von Acrylamid, Acrylsäure und Maleinsäureanhydrid ableiten. Die EP 0389893 A2 offenbart wässrige Bindemittel-Zusammensetzungen enthaltend Vinylacetat-Ethylen-Copolymerisate, die erhältlich sind mittels radikalisch initiierter Polymerisation von Vinylacetat, Ethylen und gegebenenfalls weiteren damit copolymerisierbaren, ethylenisch ungesättigten Comonomeren in wässrigem Medium in Gegenwart von Polyvinylalkohol. Die CN108301198 A empfiehlt Mischpolymerisate auf Basis von 37,5% Acrylamid, 37,5% Acrylsäure und 25% Maleinsäure als Chelatdispergiermittel für die Färbung von Polyesterfasern.

Der Erfindung lag die Aufgabe zugrunde ein wässriges Bindemittel zur Faserbindung zur Verfügung zu stellen, welches auch ohne Zugabe von Vernetzungskatalysator zu hoher Nassfestigkeit des Faserverbundes führt, ohne Formaldehyd freizusetzen.

Gegenstand der Erfindung ist eine wässrige Bindemittel-Zusammensetzung zur Faserbindung mit einem Vinylacetat-Ethylen-Copolymerisat A), erhältlich mittels radikalisch initiierter Polymerisation von a1) 60 bis 94 Gew.-% Vinylacetat, a2) 5 bis 30 Gew.-% Ethylen und a3) 0 bis 20 Gew.-% weiterer damit copolymerisierbarer, ethylenisch ungesättigter Comonomere, in Gegenwart von Polyvinylalkohol in wässrigem Medium, dadurch gekennzeichnet, dass die Polymerisation in Gegenwart eines Mischpolymerisats B) erfolgt mit
b1) 20 bis 50 Gew.-% Monomereinheiten, welche sich von ethylenisch ungesättigten Carbonsäureamiden ableiten,
b2) 20 bis 50 Gew.-% Monomereinheiten, welche sich von ethylenisch ungesättigten Monocarbonsäuren ableiten,
b3) 20 bis 50 Gew.-% Monomereinheiten, welche sich von ethylenisch ungesättigten Dicarbonsäuren oder deren Anhydriden ableiten,
wobei sich die Angaben in Gew.-% für die Monomere a1), a2) und a3), und die Angaben in Gew.-% für die Monomereinheiten b1), b2) und b3) jeweils auf 100 Gew.-% aufaddieren.

Vorzugsweise werden a1) 70 bis 85 Gew.-% Vinylacetat, bezogen auf das Gesamtgewicht der Comonomere, copolymerisiert.

Vorzugsweise werden a2) 15 bis 28 Gew.-% Ethylen, bezogen auf das Gesamtgewicht der Comonomere, copolymerisiert.

Bevorzugte ethylenisch ungesättigte Comonomere a3) sind Vinylester mit 3 bis 12 C-Atomen im Carbonsäurerest wie Vinylpropionat, Vinyllaurat, Vinylester von alpha-verzweigten Carbonsäuren mit 9 bis 13 C-Atomen wie VeoVa9^{R} oder VeoVal0^{R} (Handelsnamen der Firma Hexion). Bevorzugt sind auch (Meth)Acrylsäureester von unverzweigten oder verzweigten Alkoholen mit 1 bis 15 C-Atomen, insbesondere n-Butylacrylat, 2-Ethylhexylacrylat oder Methylmethacrylat. Bevorzugt sind auch Vinylchlorid, ethylenisch ungesättigte Carbonsäuren wie Acrylsäure, ethylenisch ungesättigte Sulfonsäuren und deren Salze wie Vinylsulfonsäure oder 2-Acrylamidopropansulfonsäure.

Die Vinylacetat-Ethylen-Copolymerisate A) enthalten vorzugsweise keine Einheiten von N-Methylol(meth)acrylamid oder Einheiten von N-(Alkoxymethyl)(meth)acrylamiden.

Für das Mischpolymerisat B) bevorzugte Monomereinheiten b1) erhält man mit Acrylamid und/oder Methacrylamid und/oder Maleinamidsäure, besonders bevorzugt mit Acrylamid. Vorzugsweise werden 30 bis 40 Gew.-% Monomereinheiten b1), welche sich von ethylenisch ungesättigten Carbonsäureamiden ableiten, copolymerisiert. Bevorzugte Monomereinheiten b2) erhält man mit Acrylsäure und/oder Methacrylsäure, besonders bevorzugt mit Acrylsäure. Vorzugsweise werden 30 bis 40 Gew.-% Monomereinheiten b2), welche sich von ethylenisch ungesättigten Monocarbonsäuren ableiten, copolymerisiert. Bevorzugte Monomereinheiten b3) erhält man mit Maleinsäureanhydrid und/oder Maleinsäure, besonders bevorzugt mit Maleinsäureanhydrid. Vorzugsweise werden 20 bis 30 Gew.-% Monomereinheiten b3), welche sich von ethylenisch ungesättigten Dicarbonsäuren oder deren Anhydriden ableiten, copolymerisiert.

Das Mischpolymerisat B) mit den Monomereinheiten b1), b2) und b3) erhält man vorzugsweise mittels radikalisch initiierter Polymerisation in Wasser, nach deren Abschluss das Mischpolymerisat in wässriger Lösung vorliegt. Diese Lösung wird dann bei der Herstellung des Vinylacetat-Ethylen-Copolymerisats A) eingesetzt.

Das Vinylacetat-Ethylen-Copolymerisat A) wird mittels radikalisch initiierter Polymerisation hergestellt. Die Herstellung kann in an sich bekannter Weise beispielsweise nach dem Suspensionspolymerisationsverfahren oder vorzugsweise nach dem Emulsionspolymerisationsverfahren in Wasser erfolgen. Die Polymerisationstemperatur beträgt im Allgemeinen 20°C bis 120°C und es wird unter Druck, im Allgemeinen zwischen 5 bar und 100 bar, gearbeitet. Die Initiierung der Polymerisation kann mit den für die Emulsionspolymerisation oder Suspensionspolymerisation gebräuchlichen wasserlöslichen oder monomerlöslichen Initiatoren oder Redox-Initiator-Kombinationen erfolgen. Als Reduktionsmittel werden Ascorbinsäure, Isoascorbinsäure oder deren Salze oder formaldehydfreie Reduktionsmittel wie 2-Hydroxy-2-sulfi-nato-essigsäure-di-Natriumsalz (Brüggolith FF6) bevorzugt. Als Oxidationsmittel werden Persulfatverbindungen und Peroxidverbindungen bevorzugt, insbesondere Ammonium- oder Alkali-Persulfate oder Wasserstoffperoxid. Als Initiatoren werden vorzugsweise keine Formaldehyd-freisetzenden Substanzen, wie Formaldehydsulfoxylate, eingesetzt.

Das Mischpolymerisat B) kann insgesamt vor dem Start der Polymerisation vorgelegt werden oder in Anteilen vorgelegt werden und der Rest während der Polymerisation zudosiert werden. Es kann auch so vorgegangen werden, dass in einem vorgeschalteten Schritt die Comonomeren b1), b2) und b3) in wässriger Lösung zum Mischpolymerisat B) quasi in situ polymerisiert werden, und dann die Polymerisation zur Herstellung des Vinylacetat-Ethylen-Copolymerisats A) initiiert wird. Die Herstellung des Vinylacetat-Ethylen-Copolymerisats A) erfolgt vorzugsweise in Gegenwart von 0,5 bis 15 Gew.-%, besonders bevorzugt von 0,5 bis 5 Gew.-% des Mischpolymerisats B), bezogen auf das Gesamtgewicht der Comonomeren a1), a2) und a3). Ein besonderer Vorteil der erfindungsgemäßen Bindemittel-Zusammensetzung besteht darin, dass die funktionellen Comonomereinheiten b1), b2) und b3) als "Präpolymer" bei der Herstellung des Vinylacetat-Ethylen-Copolymerisats A) vorliegen und deshalb in größeren Mengen in die Bindemittel-Zusammensetzung eingebracht werden können, als dies mit einer Copolymerisation mit Vinylacetat und Ethylen möglich wäre.

Die Polymerisation erfolgt in Gegenwart von vorzugsweise 1 bis 10 Gew.-%, bezogen auf das Gesamtgewicht der Comonomeren, eines oder mehrerer Polyvinylalkohole mit einem Hydrolysegrad von jeweils 80 bis 99 Mol-%, vorzugsweise 85 bis 90 Mol-%, besonders bevorzugt 87 bis 89 Mol-%. Die Höppler-Viskosität in 4 %iger wässriger Lösung der Polyvinylalkohole beträgt im Allgemeinen 2 bis 40 mPas, vorzugsweise 2 bis 15 mPas (Methode nach Höppler bei 20°C, DIN 53015). Die genannten Polyvinylalkohole sind im Handel erhältlich und mittels dem Fachmann bekannter Verfahren zugänglich.

Gegebenenfalls können zusätzlich noch geringe Mengen an Emulgatoren, beispielsweise anionische und/oder nichtionische Emulgatoren, bei der Polymerisation verwendet werden, beispielsweise 0,1 bis 2,0 Gew.-%, bezogen auf das Gesamtgewicht der Comonomeren. Beispiele für anionische Emulgatoren sind Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen. Beispiele für nichtionische Emulgatoren sind C₁₂-C₁₄-Fettalkoholethoxylate mit einem Ethoxylierungsgrad von 2 bis 20 Ethylenoxid-Einheiten. Die wässrigen Dispersionen haben im Allgemeinen einen Festgehalt von 40 bis 60 Gew.-% und bevorzugt 45 bis 55 Gew.-%. Die Brookfield-Viskosität der wässrigen Dispersionen beträgt vorzugsweise 50 bis 2000 mPas, besonders bevorzugt 100 bis 1500 mPas (bestimmt mit einem Brookfield-Viskosimeter bei 23°C bei 20 UPM bei einem Feststoffgehalt der Dispersionen von 49 bis 51 Gew.-%).

Die Bindemittel-Zusammensetzungen können auch ein oder mehrere Additive enthalten, beispielsweise Emulgatoren, wie Fettalkoholethoxylate mit niedrigen Ethoxylierungsgraden, insbesondere 2 bis 5, oder Di-Isotridecylsulfosuccinat oder deren Salze, wie Natriumsalze. Übliche Einsatzmengen an Emulgatoren betragen, bezogen auf das Trockengewicht des Polymerisats, 0 bis 1 Gew.-%, vorzugsweise 0 bis 0,6 Gew.-%. Mit Emulgatoren kann die Hydrophilie der mit solchen Bindemittel-Zusammensetzungen ausgerüsteten textilen Flächengebilde erhöht werden.

Weitere Additive sind saure Katalysatoren, wie Ammoniumchlorid, Citronensäure oder Schwefelsäure. Saure Katalysatoren werden üblicherweise in Mengen von 0 bis 2 Gew.-%, vorzugsweise 0,1 bis 1 Gew.-% zugesetzt, bezogen auf das Trockengewicht des Polymerisats. Handelt es sich bei den sauren Katalysatoren um Brönstedt-Säuren, so wird von diesen so viel eingesetzt, dass ein pH-Wert von vorzugsweise 0 bis 4 und besonders bevorzugt von 2 bis 3 resultiert. Am meisten bevorzugt werden in der wässrigen Bindemittel-Zusammensetzung keine Katalysatoren verwendet.

Die wässrige Bindemittel-Zusammensetzung in Form einer wässrigen Dispersion hat im Allgemeinen einen Festgehalt von 35 bis 65 Gew.-%, vorzugsweise von 40 bis 60 Gew.-% und besonders bevorzugt 45 bis 55 Gew.-%.

Die erfindungsgemäße Verwendung zur Herstellung der textilen Flächengebilde erfolgt im Allgemeinen, indem Fasern mit einer oder mehreren erfindungsgemäßen, wässrigen Bindemittel-Zusammensetzungen in Kontakt gebracht und anschließend getrocknet werden. Das Trocknen erfolgt vorzugsweise bei Temperaturen von ≤ 160°C, besonders bevorzugt 120 bis 160°C und am meisten bevorzugt bei 140 bis 160°C.

Die Fasern basieren im Allgemeinen auf natürlichen oder synthetischen, insbesondere organischen, Materialien. Beispiele hierfür sind Kunstfasern auf Basis von faserbildenden Polymeren wie Viskose-, Polyester-, Polyamid-, Polypropylen-, Polyethylen-Fasern. Beispiele für natürliche Fasermaterialien sind Holz-, Wolle-, Baumwolle-, Jute-, Flachs-, Hanf-, Kokos-, Ramie-, Sisal-Fasern und insbesondere Cellulose-Fasern. Die Fasern können lose oder auch in Form von Bündeln oder gewebten Textilien, Garnen oder vorzugsweise in Form von Nonwovens, wie Vliesen, Gelegen oder Gewirken, eingesetzt werden. Die Nonwovens können gegebenenfalls thermisch oder mechanisch vorverfestigt, beispielsweise genadelt, sein.

Die Fasern können beliebige Längen aufweisen, vorzugsweise 5 mm bis 100 mm, besonders bevorzugt 7 mm bis 75 mm und am meisten bevorzugt 10 mm bis 60 mm. Die Fasern können die üblichen Durchmesser haben, vorzugsweise Durchmesser von 0,1 µm bis 1 mm, besonders bevorzugt 0,5 µm bis 100 µm und am meisten bevorzugt 1 µm bis 50 µm.

Zur Herstellung der textilen Flächengebilde wird die wässrige Bindemittelzusammensetzung in einer Menge von vorzugsweise 1 bis 50 Gew.-%, besonders bevorzugt 10 bis 30 Gew.-% und am meisten bevorzugt 15 bis 25 Gew.-% eingesetzt, jeweils bezogen auf das Gesamtgewicht der Fasern. Der Anteil der Fasern beträgt vorzugsweise 40 bis 99 Gew.-%, besonders bevorzugt 60 bis 90 Gew.-% und am meisten bevorzugt 70 bis 80 Gew.-%, jeweils bezogen auf das Gesamtgewicht der textilen Flächengebilde.

Zur Herstellung der textilen Flächengebilde kann dabei so vorgegangen werden, dass vor der Verfestigung die Fasern flächenhaft ausgebreitet werden. Die Verfahren hierzu sind bekannt und primär von der Anwendung, in die das verfestigte Fasermaterial geht, abhängig. Die Fasern können beispielsweise mittels einer Luftlege-, Nasslege-, Direktspinn- oder Krempelvorrichtung ausgelegt werden. Gegebenenfalls kann vor der Verfestigung mit Bindemittel noch mechanisch verfestigt werden, beispielsweise durch Kreuzlegen, Nadeln oder Wasserstrahlverfestigung. Anschließend kann die Bindemittel-Zusammensetzung auf die ausgelegten Fasern aufgebracht werden, wobei die Bindemittel-Zusammensetzungen flächenförmig, punktförmig oder musterartig aufgebracht werden kann. Anschließend können die Fasern durch Anwendung von Temperatur und gegebenenfalls Druck gebunden werden.

Die wässrige Bindemittel-Zusammensetzung eignet sich auch zur Herstellung von Laminaten, wobei zwei Faserlagen miteinander verklebt werden, oder eine Faserlage mit einem weiteren Substrat verklebt wird. Dabei kann so vorgegangen werden, dass eine Faserlage ausgelegt wird, wobei die Bindemittel-Zusammensetzung nach dem Auslegen aufgebracht wird, und eine weitere Faserlage beispielsweisedurch Luftlegen aufgelegt wird. Statt der zweiten Faserlage kann auch ein anderes Substrat beispielsweise eine Kunststofffolie aufgelegt werden. Anschließend erfolgt die Bindung durch Anwendung von Temperatur und gegebenenfalls Druck. Mit dieser Verfahrensweise werden beispielsweise Dämmstoffe aus Reißbaumwolle zugänglich, welche mit einem Faservlies als Deckvlies dauerhaft kaschiert sind.

Geeignet sind die Bindemittel-Zusammensetzungen auch zur Herstellung von voluminösen Vliesstoffen oder Watten, die beispielsweise als Halbzeuge für die Herstellung von Formteilen aus Fasermaterialien oder als Polster-, Isolier- und Filterwatten Verwendung finden. Dazu können die Bindemittel-Zusammensetzung auf die Fasern aufgebracht und durch Temperaturerhöhung, bevorzugt in einem Formwerkzeug, verfestigt werden.

Bei den erfindungsgemäß hergestellten textilen Flächengebilden handelt es sich vorzugsweise um Vliesstoffe, insbesondere Tissues, Filze, Watten oder grobmaschige, lockere Gewebe, Gestricke oder Gewirke. Die textilen Flächengebilde können beispielsweise im Automobilsektor, für Haushaltsprodukte wie Tischdecken, Hygieneartikel wie Toilettenpapier, in der Bekleidungsindustrie, für medizinische Textilien oder Geotextilien eingesetzt werden.

Die nachfolgenden Beispiele dienen der weiteren Erläuterung der Erfindung:
Herstellung der wässrigen Lösung des Mischpolymerisats B): Es wurden 0,05 g Ammoniumeisen(II)sulfat in 86 g entionisiertem Wasser vorgelegt und der Polymerisationsreaktor mit Stickstoff gespült und auf 70°C erhitzt. Eine Mischung von 81,8 g einer 30 Gew.-%igen wässrigen Acrylamidlösung, 24,5 g Acrylsäure und 13,6 g Maleinsäureanhydrid in 208 g entionisiertem Wasser wurde über 90 min in den Reaktor dosiert. Die Reaktion wurde durch Zudosieren einer 1 Gew.-%igen wässrigen Wasserstoffperoxid-Lösung und einer 3,1 Gew.-%igen wässrigen Natriumisoascorbat-Lösung mit einer Rate von 6 ml/h gestartet und diese Rate über 90 min gehalten. Es wurde eine wässrige Lösung eines Mischpolymerisats mit 39 Gew.-% % Acrylamid-Einheiten, 39 Gew.-% Acrylsäure-Einheiten und 22 Gew.-% Maleinsäure-Einheiten mit einem Festgehalt von ca. 14 Gew.-% erhalten.

### Beispiel 1:

Herstellung der wässrigen Dispersion des Vinylacetat-Copolymerisats A) in Gegenwart von Mischpolymerisat B):
In einem Druckreaktor mit Rührer und Heizmantel wurden 400 g Wasser, 4,1 g eines Polyvinylalkohols mit einem Hydrolysegrad von 88 Mol-% und einer Höppler-Viskosität von 13 mPas, 36,9 g eines Polyvinylalkohols mit einem Hydrolysegrad von 88 Mol-% und einer Höppler-Viskosität von 4 mPas vorgelegt und 0,5 g Zitronensäure und 0,06 g Ammoniumeisen(II)sulfat zugegeben. Mittels Zugabe von weiterer Zitronensäure wurde ein pH-Wert von 4,1 eingestellt. Anschließend wurde evakuiert und mit Stickstoff gespült. Dann wurden 591 g Vinylacetat zugegeben und 229,5 g Ethylen aufgepresst und das Gemisch auf 32°C aufgeheizt.

Eine 1 Gew.-%ige wässrige Wasserstoffperoxid-Lösung und eine 3,1 Gew.-%ige wässrige Natriumisoascorbat-Lösung wurden jeweils mit einer Dosierrate von 5,6 ml/h zudosiert. Gleichzeitig wurde mit der Dosierung der 14 Gew.-%-igen Lösung des Acrylamid/ Acrylsäure/Maleinsäure-Mischpolymerisats B) begonnen und im Verlauf von 150 Minuten 133 g der wässrigen Lösung zudosiert. Innerhalb von 50 Minuten stieg die Polymerisationstemperatur auf 70°C. 60 Minuten nach Beginn der Initiatordosierung wurde mit der Dosierung von weiteren 147 g Vinylacetat über 138 Minuten begonnen und der Ethylendruck bei 68 bar gehalten bis weitere 58 g Ethylen aufgedrückt waren. Nach Beendigung der Vinylacetat-Dosierung wurden die Dosierraten der Initiatordosierungen auf 15,4 ml/h erhöht. Fünfeinhalb Stunden nach Beginn der Initiatordosierung wurde die Polymerisation abgebrochen und mit einer wässrigen Ammoniaklösung ein pH-Wert von 4,2 eingestellt. Es wurde eine wässrige Dispersion mit einem Festgehalt von circa 53 Gew.-% erhalten.

### Vergleichsbeispiel 2:

Es wurde analog Beispiel 1 vorgegangen, mit dem Unterschied, dass die 133 g der 14 %-igen Lösung des Mischpolymerisats B) nicht während der Polymerisation zugegeben wurden, sondern erst nach Abschluss der Polymerisation zur wässrigen Dispersion des Vinylacetat-Ethylen-Copolymers zudosiert wurden.

### Vergleichsbeispiel 3:

Analog zum Beispiel 1 aus der PCT-Anmeldung mit der Anmeldenummer PCT/EP2019/052740 wurde eine wässrige Dispersion (Festgehalt ca. 55 %) eines Copolymerisats aus 77 Gew.-% Vinylacetat, 21 Gew.-% Ethylen, 0,8 Gew.-% Acrylamid, 0,8 Gew.-% Acrylsäure und 0,4 Gew.-% Maleinsäureanhydrid, stabilisiert mit 10 Gew.-%, bezogen auf das Gesamtgewicht der Comonomere, eines Polyvinylalkohols mit einer Höppler-Viskosität von 5 mPas und einem Hydrolysegrad von 88 Mol-% hergestellt.

### Vergleichsbeispiel 4:

Analog zum Vergleichsbeispiel 5 aus der PCT-Anmeldung mit der Anmeldenummer PCT/EP2019/052740 wurde eine wässrige Dispersion (Festgehalt ca. 55 %) eines Copolymerisats aus 78 Gew.-% Vinylacetat, 21,2 Gew.-% Ethylen und 0,8 Gew.-% N-Methylolacrylamid, stabilisiert mit 10 Gew.-%, bezogen auf das Gesamtgewicht der Comonomere, eines Polyvinylalkohols mit einer Höppler-Viskosität von 5 mPas und einem Hydrolysegrad von 88 Mol-% hergestellt.

### Bestimmung der Nassfestigkeitswerte für Airlaid-Vliesstoffe:

Auf ein thermisch vorgebundenes Airlaidvlies (75 g/m²; 88 % Fluff pulp und 12 % PP/PE-Bikomponentenfasern; 0,85 mm Dicke) wurde die mit Wasser auf einen Festgehalt von 20 % verdünnte Polymerdispersion des jeweiligen (Vergleichs)Beispiels mittels einer Sprühflotte mit einem halbautomatischen Sprühaggregat nach dem Airlessverfahren (Schlitzdüsen Unijet 8001 E; 5 bar) homogen beidseitig besprüht und anschließend in einem Labor-Durchlufttrockner (Mathis LTF; Fa. Mathis / CH) für 3 min bei 160°C getrocknet (Auftragungsmenge: 20 Gew.-% Polymer bezogen auf Gesamtgewicht aus Polymer und Vlies).

Pro Reißfestigkeitsprüfung wurden je 10 Vliesstreifen (20 cm Einspannlänge; 5 cm Einspannlänge) in Querrichtung zur Maschinenproduktionsrichtung angefertigt. Zur Messung der Nassreißfestigkeiten wurden die Streifenproben vor der Messung jeweils 1 min in Wasser gelagert.

Die Nassreißfestigkeiten wurden analog der DIN EN 29073 (Teil 3: Prüfverfahren für Vliesstoffe, 1992) bestimmt und die Messproben mittels einer Höchstzugkraftmessung an einer Zwick^{®} 1445-Prüfmaschine (100 N Messdose) mit einer TestXpert^{®}-Software Version 11.02 (Fa. Zwick Roell) bei einer Einspannlänge von 100±1 mm, einer Einspannbreite von 15±1 mm und bei einer Deformationsgeschwindigkeit von 150 mm/min durchgeführt.

Die Ergebnisse der Austestung sind in Tabelle 1 zusammengefasst.

**Tabelle 1:**

| Beispiel | AA (%) | AS (%) | MSA (%) | NMA (%) | Nassfestigkeit (N/5cm) *** |
|---|---|---|---|---|---|
| | | | | | |
| Bsp. 1 | 0,8* | 0,8* | 0,4* | 0,0 | 1353/1200 |
| Vbsp. 2 | 0,8* | 0,8* | 0,4* | 0,0 | 734/616 |
| Vbsp. 3 | 0,8** | 0,8** | 0,4** | 0,0 | 1170/1120 |
| Vbsp. 4 | 0,0 | 0,0 | 0,0 | 0,8** | 1020/1570 |

| | | | | | |
|---|---|---|---|---|---|
| * = als Mischpolymerisat B) ** = mit Vinylacetat und Ethylen copolymerisiert *** = ohne Katalysator / mit 1 % Zitronensäure als Katalysator | | | | | |

Der Vergleich von Beispiel 1 mit Vergleichsbeispiel 3 zeigt, dass man mit einem "Präpolymer" (Mischpolymerisat B) aus den Acrylamid-, Acrylsäure- und Maleinsäure-Einheiten eine Verbesserung der Festigkeitswerte erhält, im Vergleich zu einem Vinylacetat-Ethylen-Copolymer, welche diese Monomereinheiten im Copolymer enthalten (Vergleichsbeispiel 3).

Der Vergleich von Beispiel 1 mit Vergleichsbeispiel 2 zeigt, dass diese Verbesserung nur dann erhalten wird, wenn das Mischpolymerisat B) (Präpolymer) während der Herstellung des Vinylacetat-Ethylen-Copolymers im Polymerisationsgemisch vorliegt (Beispiel 1) und nicht bei dessen nachträglicher Zugabe (Vergleichsbeispiel 2).

Der Vergleich von Beispiel 1 mit Vergleichsbeispiel 4 zeigt, dass mit dem erfindungsgemäßen Bindemittel auch ohne vernetzende NMA-Einheiten und auch ohne Katalysator hohe Nassfestigkeiten erhalten wird.

## Patentansprüche

1. Wässrige Bindemittel-Zusammensetzung zur Faserbindung mit einem Vinylacetat-Ethylen-Copolymerisat A), erhältlich mittels radikalisch initiierter Polymerisation von a1) 60 bis 94 Gew.-% Vinylacetat, a2) 5 bis 30 Gew.-% Ethylen und a3) 0 bis 20 Gew.-% weiterer damit copolymerisierbarer, ethylenisch ungesättigter Comonomere, in Gegenwart von Polyvinylalkohol in wässrigem Medium, **dadurch gekennzeichnet, dass** die Polymerisation in Gegenwart eines Mischpolymerisats B) erfolgt mit b1) 20 bis 50 Gew.-% Monomereinheiten, welche sich von ethylenisch ungesättigten Carbonsäureamiden ableiten, b2) 20 bis 50 Gew.-% Monomereinheiten, welche sich von ethylenisch ungesättigten Monocarbonsäuren ableiten, b3) 20 bis 50 Gew.-% Monomereinheiten, welche sich von ethylenisch ungesättigten Dicarbonsäuren oder deren Anhydriden ableiten, wobei sich die Angaben in Gew.-% für die Monomere a1), a2) und a3), und die Angaben in Gew.-% für die Monomereinheiten b1), b2) und b3) jeweils auf 100 Gew.-% aufaddieren.

2. Wässrige Bindemittel-Zusammensetzung nach Anspruch 1, **dadurch gekennzeichnet, dass** a1) 70 bis 85 Gew.-% Vinylacetat, bezogen auf das Gesamtgewicht der Monomere a1), a2) und a3), copolymerisiert werden.

3. Wässrige Bindemittel-Zusammensetzung nach Anspruch 1 oder 2, **dadurch gekennzeichnet, dass** a2) 15 bis 28 Gew.-% Ethylen, bezogen auf das Gesamtgewicht der Monomere a1), a2) und a3), copolymerisiert werden.

4. Wässrige Bindemittel-Zusammensetzung nach Anspruch 1 bis 3, **dadurch gekennzeichnet, dass** das Vinylacetat-Ethylen-Copolymerisate A) keine Einheiten von N-Methylol(meth) acrylamid oder Einheiten von N (Alkoxymethyl)(meth) acrylamid enthalten.

5. Wässrige Bindemittel-Zusammensetzung nach Anspruch 1 bis 4, **dadurch gekennzeichnet, dass** das Mischpolymerisat B) Monomereinheiten b1) von einem oder mehreren Monomeren aus der Gruppe enthaltend Acrylamid, Methacrylamid und Maleinamidsäure enthält.

6. Wässrige Bindemittel-Zusammensetzung nach Anspruch 1 bis 5, **dadurch gekennzeichnet, dass** das Mischpolymerisat B) Monomereinheiten b2) von einem oder mehreren Monomeren aus der Gruppe enthaltend Acrylsäure und Methacrylsäure enthält.

7. Wässrige Bindemittel-Zusammensetzung nach Anspruch 1 bis 6, **dadurch gekennzeichnet, dass** das Mischpolymerisat B) Monomereinheiten b3) von einem oder mehreren Monomeren aus der Gruppe enthaltend Maleinsäureanhydrid und Maleinsäure enthält.

8. Wässrige Bindemittel-Zusammensetzung nach Anspruch 1 bis 6, **dadurch gekennzeichnet, dass** das Mischpolymerisat B) in einer Menge von 0,5 bis 15 Gew.-% des Mischpolymerisats B), bezogen auf das Gesamtgewicht der Comonomeren a1), a2) und a3), enthalten ist.

9. Verfahren zur Herstellung einer wässrigen Bindemittel-Zusammensetzung nach Anspruch 1 bis 8 mittels radikalisch initiierter Polymerisation von a1) 60 bis 94 Gew.-% Vinylacetat, a2) 5 bis 30 Gew.-% Ethylen, a3) 0 bis 20 Gew.-% weiterer damit copolymerisierbarer, ethylenisch ungesättigter Comonomere, in Gegenwart von Polyvinylalkohol in wässrigem Medium, **dadurch gekennzeichnet, dass** die Polymerisation in Gegenwart eines Mischpolymerisats B) erfolgt mit b1) 20 bis 50 Gew.-% Monomereinheiten, welche sich von ethylenisch ungesättigten Carbonsäureamiden ableiten, b2) 20 bis 50 Gew.-% Monomereinheiten, welche sich von ethylenisch ungesättigten Monocarbonsäuren ableiten, b3) 20 bis 50 Gew.-% Monomereinheiten, welche sich von ethylenisch ungesättigten Dicarbonsäuren oder deren Anhydriden ableiten, wobei sich die Angaben in Gew.-% für die Monomere a1), a2) und a3), und die Angaben in Gew.-% für die Monomereinheiten b1), b2) und b3) jeweils auf 100 Gew.-% aufaddieren.

10. Verfahren zur Herstellung einer wässrigen Bindemittel-Zusammensetzung nach Anspruch 9, **dadurch gekennzeichnet, dass** das Mischpolymerisat B) insgesamt vor dem Start der Polymerisation vorgelegt wird oder in Anteilen vorgelegt wird und der Rest während der Polymerisation zudosiert wird.

11. Verfahren zur Herstellung einer wässrigen Bindemittel-Zusammensetzung nach Anspruch 9, **dadurch gekennzeichnet, dass** in einem vorgeschalteten Schritt die Comonomeren b1), b2) und b3) in wässriger Lösung zum Mischpolymerisat B) in situ polymerisiert werden, und dann die Polymerisation zur Herstellung des Vinylacetat-Ethylen-Copolymerisats A) initiiert wird.

12. Verwendung einer wässrigen Bindemittel-Zusammensetzung nach Anspruch 1 bis 8 zur Herstellung von textilen Flächengebilden.

13. Verwendung nach Anspruch 12, wobei Fasern mit der wässrigen Bindemittel-Zusammensetzung in Kontakt gebracht und anschließend getrocknet werden.

14. Verwendung nach Anspruch 12 oder 13, **dadurch gekennzeichnet, dass** in der wässrigen Bindemittel-Zusammensetzung keine Katalysatoren enthalten sind.

## Claims

1. Aqueous binder composition for binding fibres comprising a vinyl acetate-ethylene copolymer A), obtainable by means of radically initiated polymerization of a1) 60 to 94% by weight vinyl acetate, a2) 5 to 30% by weight ethylene and a3) 0 to 20% by weight of further ethylenically unsaturated comonomers copolymerizable therewith, in the presence of polyvinyl alcohol in aqueous medium, **characterized in that** the polymerization is carried out in the presence of a copolymer B) having b1) 20 to 50% by weight of monomer units derived from ethylenically unsaturated carboxamides, b2) 20 to 50% by weight of monomer units derived from ethylenically unsaturated monocarboxylic acids, b3) 20 to 50% by weight of monomer units derived from ethylenically unsaturated dicarboxylic acids or anhydrides thereof, where the figures in % by weight for the monomers a1), a2) and a3) add up to 100% by weight, and the figures in % by weight for the monomer units b1), b2) and b3) add up to 100% by weight.

2. Aqueous binder composition according to Claim 1, **characterized in that** a1) 70 to 85% by weight vinyl acetate, based on the total weight of the monomers a1), a2) and a3), are copolymerized.

3. Aqueous binder composition according to Claim 1 or 2, **characterized in that** a2) 15 to 28% by weight ethylene, based on the total weight of the monomers a1), a2) and a3), are copolymerized.

4. Aqueous binder composition according to Claims 1 to 3, **characterized in that** the vinyl acetate-ethylene copolymer A) does not comprise any N-methylol(meth)acrylamide units or N-(alkoxymethyl)(meth)acrylamide units.

5. Aqueous binder composition according to Claims 1 to 4, **characterized in that** the copolymer B) comprises monomer units b1) of one or more monomers from the group comprising acrylamide, methacrylamide and maleamic acid.

6. Aqueous binder composition according to Claims 1 to 5, **characterized in that** the copolymer B) comprises monomer units b2) of one or more monomers from the group comprising acrylic acid and methacrylic acid.

7. Aqueous binder composition according to Claims 1 to 6, **characterized in that** the copolymer B) comprises monomer units b3) of one or more monomers from the group comprising maleic anhydride and maleic acid.

8. Aqueous binder composition according to Claims 1 to 6, **characterized in that** the copolymer B) is present in an amount of 0.5 to 15% by weight copolymer B), based on the total weight of the comonomers a1), a2) and a3).

9. Process for producing an aqueous binder composition according to Claims 1 to 8 by means of radically initiated polymerization of a1) 60 to 94% by weight vinyl acetate, a2) 5 to 30% by weight ethylene, a3) 0 to 20% by weight of further ethylenically unsaturated comonomers copolymerizable therewith, in the presence of polyvinyl alcohol in aqueous medium, **characterized in that** the polymerization is carried out in the presence of a copolymer B) having b1) 20 to 50% by weight of monomer units derived from ethylenically unsaturated carboxamides, b2) 20 to 50% by weight of monomer units derived from ethylenically unsaturated monocarboxylic acids, b3) 20 to 50% by weight of monomer units derived from ethylenically unsaturated dicarboxylic acids or anhydrides thereof, where the figures in % by weight for the monomers a1), a2) and a3) add up to 100% by weight, and the figures in % by weight for the monomer units b1), b2) and b3) add up to 100% by weight.

10. Process for producing an aqueous binder composition according to Claim 9, **characterized in that** the copolymer B) is initially charged as a whole prior to the start of the polymerization or is initially charged in portions and the remainder is metered in during the polymerization.

11. Process for producing an aqueous binder composition according to Claim 9, **characterized in that** in an upstream step the comonomers b1), b2) and b3) are polymerized in situ in aqueous solution to form the copolymer B), and then the polymerization to produce the vinyl acetate-ethylene copolymer A) is initiated.

12. Use of an aqueous binder composition according to Claims 1 to 8 for producing textile fabrics.

13. Use according to Claim 12, wherein fibres are brought into contact with the aqueous binder composition and are then dried.

14. Use according to Claim 12 or 13, **characterized in that** no catalysts are present in the aqueous binder composition.

## Revendications

1. Composition aqueuse de liant pour liaison de fibres comportant un copolymère d'acétate de vinyle-éthylène A), pouvant être obtenu au moyen d'une polymérisation initiée de manière radicalaire de a1) 60 à 94 % en poids d'acétate de vinyle, a2) 5 à 30 % en poids d'éthylène et a3) 0 à 20 % en poids d'autres comonomère éthyléniquement insaturés copolymérisables avec ceux-ci, en présence d'un poly(alcool vinylique) en milieu aqueux, **caractérisée en ce que** la polymérisation est réalisée en présence d'un polymère mixte B) avec b1) 20 à 50 % en poids de motifs monomériques qui sont issus d'amides d'acides carboxyliques éthyléniquement insaturés, b2) 20 à 50 % en poids de motifs monomériques qui sont issus d'acides monocarboxyliques éthyléniquement insaturés, b3) 20 à 50 % en poids de motifs monomériques qui sont issus d'acides dicarboxyliques éthyléniquement insaturés ou de leurs anhydrides, les données en % en poids pour les monomères a1), a2) et a3), et les données en % en poids pour les motifs monomériques b1), b2) et b3) totalisant à chaque fois 100 % en poids.

2. Composition aqueuse de liant selon la revendication 1, **caractérisée en ce que** a1) 70 à 85 % en poids d'acétate de vinyle, par rapport au poids total des monomères a1), a2) et a3), sont copolymérisés.

3. Composition aqueuse de liant selon la revendication 1 ou 2, **caractérisée en ce que** a2) 15 à 28 % en poids d'éthylène, par rapport au poids total des monomères a1), a2) et a3), sont copolymérisés.

4. Composition aqueuse de liant selon les revendications 1 à 3, **caractérisée en ce que** le copolymère d'acétate de vinyle-éthylène A) ne contient aucun motif de N-méthylol(méth)acrylamide ou motif de N-(alcoxyméthyl) (méth)acrylamide.

5. Composition aqueuse de liant selon les revendications 1 à 4, **caractérisée en ce que** le polymère mixte B) contient des motifs monomériques b1) d'un ou plusieurs monomères du groupe contenant l'acrylamide, le méthacrylamide et l'acide maléique.

6. Composition aqueuse de liant selon les revendications 1 à 5, **caractérisée en ce que** le polymère mixte B) contient des motifs monomériques b2) d'un ou plusieurs monomères du groupe contenant l'acide acrylique et l'acide méthacrylique.

7. Composition aqueuse de liant selon les revendications 1 à 6, **caractérisée en ce que** le polymère mixte B) contient des motifs monomériques b3) d'un ou plusieurs monomères du groupe contenant l'anhydride d'acide maléique et l'acide maléique.

8. Composition aqueuse de liant selon les revendications 1 à 6, **caractérisée en ce que** le polymère mixte B) est contenu en une quantité de 0,5 à 15 % en poids du polymère mixte B, par rapport au poids total des comonomères a1), a2) et a3).

9. Procédé de préparation d'une composition aqueuse de liant selon les revendications 1 à 8 au moyen d'une polymérisation initiée de manière radicalaire de a1) 60 à 94 % en poids d'acétate de vinyle, a2) 5 à 30 % en poids d'éthylène et a3) 0 à 20 % en poids d'autres comonomère éthyléniquement insaturés copolymérisables avec ceux-ci, en présence d'un poly(alcool vinylique) en milieu aqueux, **caractérisé en ce que** la polymérisation est réalisée en présence d'un polymère mixte B) avec b1) 20 à 50 % en poids de motifs monomériques qui sont issus d'amides d'acides carboxyliques éthyléniquement insaturés, b2) 20 à 50 % en poids de motifs monomériques qui sont issus d'acides monocarboxyliques éthyléniquement insaturés, b3) 20 à 50 % en poids de motifs monomériques qui sont issus d'acides dicarboxyliques éthyléniquement insaturés ou de leurs anhydrides, les données en % en poids pour les monomères a1), a2) et a3), et les données en % en poids pour les motifs monomériques b1), b2) et b3) totalisant à chaque fois 100 % en poids.

10. Procédé de préparation d'une composition aqueuse de liant selon la revendication 9, **caractérisé en ce que** le polymère mixte B) est chargé entièrement avant le début de la polymérisation ou est chargé en parties et le reste est ajouté pendant la polymérisation.

11. Procédé de préparation d'une composition aqueuse de liant selon la revendication 9, **caractérisé en ce que** dans une étape en amont, les comonomères b1), b2) et b3) sont polymérisés *in situ* en solution aqueuse pour donner le polymère mixte B), et puis la polymérisation pour la préparation du copolymère d'acétate de vinyle-éthylène A) est initiée.

12. Utilisation d'une composition aqueuse de liant selon les revendications 1 à 8 pour la préparation de structures planes.

13. Utilisation selon la revendication 12, des fibres étant mises en contact avec la composition aqueuse de liant et étant ensuite séchées.

14. Utilisation selon la revendication 12 ou 13, **caractérisée en ce qu'**aucun catalyseur n'est contenu dans la composition aqueuse de liant.
